# EUROPÄISCHE PATENTSCHRIFT

(11) **EP 0 303 008 B1**
(45) Veröffentlichungstag und Bekanntmachung des Hinweises auf die Patenterteilung: **28.07.1993**
(21) Anmeldenummer: 88108077.4
(22) Anmeldetag: 20.05.1988
(51) Int. Cl.: G01D 5/36

(54) **Inkrementale Längen- oder Winkelmesseinrichtung**
Incremental length or angle measuring device
Dispositif de mesure angulaire ou linéaire incrémentiel

(30) Priorität: 11.08.1987 DE 3726678
(43) Veröffentlichungstag der Anmeldung: 15.02.1989
(73) Patentinhaber: Dr. Johannes Heidenhain GmbH, D-83292 Traunreut (DE)
(72) Erfinder: Nelle, Günther, Dr.-Ing., D-8221 Bergen (DE)

(56) Entgegenhaltungen:
- EP-A- 0 100 243
- DD-A- 131 054

## Beschreibung

Die Erfindung betrifft eine inkrementale Längen-oder Winkelmeßeinrichtung gemäß dem Oberbegriff des Anspruchs 1.

Derartige Einrichtungen sind aus der Literaturstelle: Walcher, Hans, "Digitale Lagemeßtechnik - Technik der digitalen Messung von Winkeln und Wegen", VDI-Verlag 1974, Seiten 14-31 bekannt. Eine inkrementale Maßverkörperung setzt sich aus Teilstücken unterschiedlicher physikalischer Eigenschaften zusammen, bei optischen Systemen z.B. aus transparenten und opaken Bereichen. Der Abstand gleichartiger Teilstücke ist die Teilungsperiode T. Die Zählung der Teilstücke entlang einer Meßstrecke liefert die Lageinformation. In den Fällen, in denen ein Wechsel der Meßrichtung auftreten kann, wird eine Richtungsinformation benötigt. Diese Information wird dadurch gewonnen, daß zwei Abtaststellen den Maßstab um (T/4 ± N . T/2) versetzt abtasten, wobei N=0,1,2,... ist. Bei Richtungsumkehr ändert sich die Phasenbeziehung der beiden Signale so, daß das in der einen Richtung voreilende Signal in der anderen Richtung nacheilt. Zusätzlich zur Richtungsinformation liefern zwei um eine Viertelperiode phasenverschobene Signale die Möglichkeit, eine Signalverdoppelung vorzunehmen. Mit vier um eine Viertelperiode phasenverschobenen Signalen entstehen durch Subtraktion von jeweils zwei gegenphasigen Signalen zwei Meßspannungen ohne Gleichanteil und mit doppelter Amplitude. Zusätzlich zu den Zählimpulsen erzeugen die meisten inkrementalen Meßeinrichtungen beim Erreichen einer vorgegebenen Position einen Referenzimpuls, der eine reproduzierbare Festlegung des Positionsnullpunktes erlaubt und weiterhin zur Fehlerkontrolle sowie bei Drehgebern zur Zählung der Umdrehungen herangezogen werden kann. Der Referenzimpuls wird durch logische Verknüpfung der beiden gegenphasigen Signale mit dem Referenzsignal erzeugt. In allen Fällen muß der Referenzimpuls einem vorgegebnen Inkrement des Maßstabes zugeordnet sein. Die Referenzmarke oder mehrere Referenzmarken sind in einer separaten Spur parallel zur Inkrementalspur angeordnet. Es ergibt sich somit zwischen den Abtaststellen der Inkrementalspur und der Abtaststelle der Referenzmarke ein Abstand senkrecht zur Meßrichtung. Bei Verkippungen der Abtasteinheit um eine senkrecht zur Maßstaboberfläche verlaufende Achse bleibt die Zuordnung zwischen dem vorgegebenen Inkrement und dem Referenzimpuls nicht mehr erhalten, was im laufenden Meßverfahren zu Positionierfehlern führt. Weiterhin hat die Anordnung mit einer Inkrementalspur und mehreren in Meßrichtung versetzten Abtaststellen den Nachteil, daß bei zusammengesetzten Maßstäben, wie sie oft für große Meßlängen Verwendung finden, Phasenwinkelfehler und somit Unterteilungsfehler jeweils beim Überfahren eines Maßstabstoßes auftreten.

Aus der EP-A- 0 100 243 ist eine Längen- oder Winkelmeßeinrichtung bekannt, bei der beidseitig einer Codemarkenspur Inkrementalspuren mit unterschiedlicher Teilungsperiode angeordnet sind.

Aus der Literaturstelle: "Schaltpunktgewinnung bei der Positionierung mechanischer Baugruppen"; Driescher, Jwainsky; Feingerätetechnik, 30.Jg., Heft 9/1981, Seiten 395-400 sowie aus der DE-OS 33 25 353 und aus der DE-OS 35 10 651 sind inkrementale Meßeinrichtungen bekannt, bei denen mehrere gegeneinander phasenversetzte Inkrementalspuren mit gleicher Teilungsperiode parallel nebeneinander angeordnet sind. Die Abtastung erfolgt mittels eines Abtastkopfes, wobei mehrere Abtastelemente auf einer Linie senkrecht zur Meßrichtung verlaufend angeordnet sind und jeder Inkrementalspur ein Abtastelement zugeordnet ist. Diese Anordnungen haben zwar den Vorteil, daß an einem Maßstabstoß keine Phasenwinkelfehler und damit keine Unterteilungsfehler auftreten. Bei dem oben genannten Stand der Technik ist aber den parallelen Inkrementalspuren keine Referenzmarke zugeordnet.

Der Erfindung liegt die Aufgabe zugrunde, eine inkrementale Längen- oder Winkelmeßeinrichtung zu schaffen, mit der eine Positionsmessung mit hoher Genauigkeit auch bei zusammengesetzten Maßverkörperungen ermöglicht wird und eine exakte Zuordnung zwischen einem Referenzsignal und den Signalen der Inkrementalspuren auch bei Lagefehlern der Abtasteinheit gewährleistet ist.

Diese Aufgabe wird erfindungsgemäß durch die Merkmale des Anspruchs 1 gelöst.

Die mit der Erfindung erzielten Vorteile bestehen insbesondere darin, daß bei Verkippungen der Abtasteinheit um eine senkrecht zur Oberfläche der Maßverkörperung verlaufende Achse die Zuordnung zwischen einem vorgegebenen Inkrement und dem Referenzsignal erhalten bleibt. Als weiterer Vorteil ist anzuführen, daß bei der Abtastung eines Maßstabstoßes keine Phasenwinkelfehler und somit keine Unterteilungsfehler auftreten.

Vorteilhafte Ausbildungen der Erfindung entnimmt man den Unteransprüchen.

Ausführungsbeispiele der Erfindung werden anhand der Zeichnung näher erläutert.

Es zeigt:
- Figur 1: schematisch eine inkrementale Längenmeßeinrichtung;
- Figur 2: ein Signaldiagramm des Referenzsignals und der Signale der Inkrementalspuren zu Figur 1;
- Figur 3: ein weiteres Diagramm der Signale bei Verkippung der Abtasteinheit;
- Figur 4: eine weitere schematische Darstellung einer inkrementalen Längenmeßeinrichtung;
- Figur 5: ein Signaldiagramm zu Figur 4.

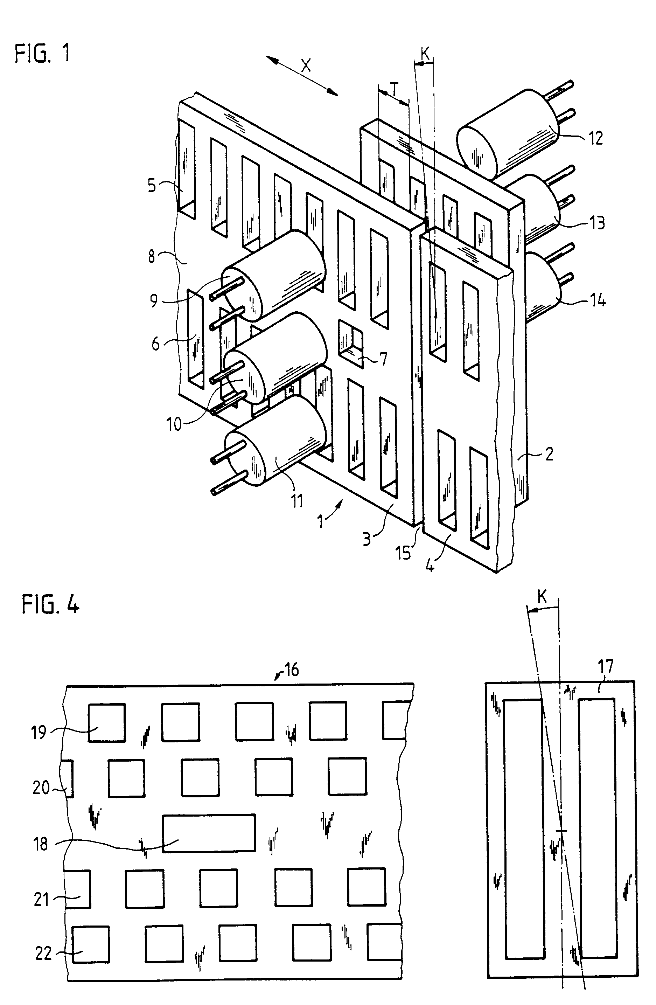

In Figur 1 ist schematisch eine lichtelektrische inkrementale Längenmeßeinrichtung zur richtungsabhängigen Wegmessung gezeigt, die aus einer Maßverkörperung in Form eines inkrementalen Maßstabes 1 und einer darauf gleitenden Abtastplatte 2 einer Abtasteinheit besteht. In nicht dargestellter Weise sind jeweils der Maßstab 1 und die Abtastplatte 2 mit einem von zwei zueinander verschiebbaren Objekten, beispielsweise mit Maschinenteilen einer Bearbeitungs- oder einer Meßmaschine, verbunden. Der Maßstab 1 ist im gezeigten Ausführungsbeispiel aus zwei Teilstücken 3 und 4 zusammengesetzt, was besonders für lange Meßwege erforderlich ist. Auf dem Maßstab 1 sind zwei Inkrementalspuren 5 und 6 sowie eine Referenzmarke 7 in einer Referenzmarkenspur 8 aufgebracht, die im Durchlicht photoelektrisch berührungsfrei von der Abtasteinheit abgetastet werden. Die Abtasteinheit enthält außer der Abtastplatte 2 auch die den Inkrementalspuren 5 und 6 sowie der Referenzmakrenspur 8 zugeordneten Lichtquellen 9, 10, 11 und die Photodetektoren 12, 13, 14. Die Strahlung der Lichtquellen 9, 10, 11 fallen auf den Maßstab 1 und gelangen nur an den offenen Bereichen des Maßstabes 1 auf die Abtastplatte 2, die mit mehreren, über die gesamte Maßstabbreite parallel verlaufenden Öffnungen versehen ist. Hinter der Abtastplatte 2 sind die Photodetektoren 12, 13, 14 übereinander in einer Linie senkrecht zur Meßrichtung X und parallel zu den Öffnungen der Abtastplatte 2 angeordnet. Die Inkrementalspuren 5, 6 verlaufen parallel zueinander, sind beidseitig der Referenzmarke 7 angebracht, besitzen gleiche Teilungsperioden T und sind um T/4 gegeneinander versetzt. Die Teilungsperiode der Abtastplatte 2 entspricht der Teilungsperiode T der beiden Inkrementalspuren 5, 6. Im Beispiel besitzt die Abtastplatte 2 mehrere Öffnungen mit der Breite T/2, es würde aber auch eine einzige Öffnung zur Abtastung ausreichen.

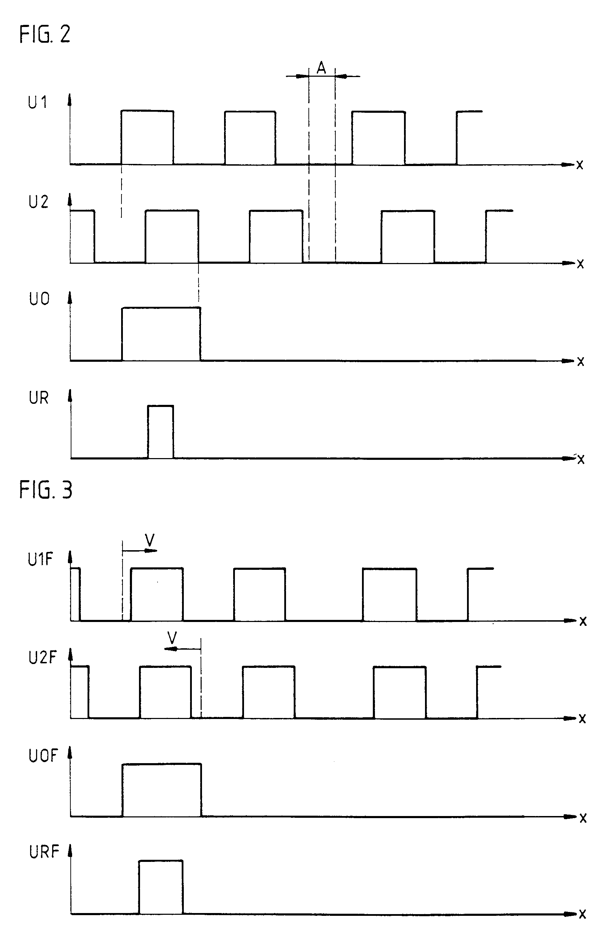

Bei der Bewegung der Abtastplatte 2 relativ zum Maßstab 1 in Meßrichtung X erzeugen die beiden Photoelemente 12 und 14 aus dem modulierten Lichtstrom zwei periodische elektrische sinusförmige Abtastsignale, die einen gegenseitigen Phsenversatz von 90° wegen des Versatzes der beiden Inkrementalspuren 5, 6 des Maßstabes 1 um ein Viertel der Teilungsperiode T aufweisen. Die sinusförmigen Abtastsignale werden jeweils einer nachgeschalteten Impulsformerstufe mit Komparatoren zugeführt, die bei einer bestimmten Eingangsspannung sehr schnell von einem logischen Ausgangszustand in den anderen logischen Zustand umschalten. Die so nach bekannten Verfahren erzeugten Rechtecksignale U1, U2 sind in Figur 2 gezeigt. Das Signal U0 ist das getriggerte Abtastsignal des Photodetektors 13, der der Referenzmarke 7 zugeordnet ist. Durch bekannte logische UND-Verknüpfungen der Signale U1, U2 sowie U0 wird der Referenzimpuls UR gebildet. Mit dem aus der Referenzmarke 7 gewonnenen Referenzimpuls UR können verschiedene Funktionen ausgelöst werden. Durch entsprechende Auswertung wird beispielsweise aus einer inkrementalen Meßeinrichtung eine quasi absolute Meßeinrichtung, wenn der Referenzmarke 7 ein vorgegebener Zählwert zugeordnet wird, der deren absolute Position kennzeichnet.

Bei Verkippungen der Abtasteinheit oder der Abtastplatte 2 allein um eine senkrecht zur Maßstaboberfläche verlaufende Achse ändert sich die Zuordnung des Referenzsignals U0F zu den Rechtecksignalen U1F und U2F in Abhängigkeit vom Kippwinkel und von den Abständen zwischen der Referenzmarke 7 und den Inkrementalspuren 5, 6. Wenn nun erfindungsgemäß der Abstand zwischen der Mitte der Referenzmarke 7 und der Mittellinie bzw. der Abtaststelle der Inkrementalspur 5 mit dem Abstand zwischen der Mitte bzw. der Abtaststelle der Referenzmarke 7 und der Mittellinie bzw. der Abtaststelle der Inkrementalspur 6 übereinstimmt, ergibt sich eine Phasenverschiebung V der Rechtecksignale U1F und der Rechtecksignale U2F um den gleichen Betrag, aber in entgegengesetzten Richtungen. Diese Verschiebung V ist in Figur 3 gezeigt. Durch die gleichmäßige Verschiebung V bleibt die Zuordnung zwischen dem Signal, das aus der logischen UND-Verknüpfung der Rechtecksignale U1F, U2F und dem Referenzsignal U0F resultiert, erhalten.

Aus den Figuren 2 und 3 ist auch ersichtlich, daß sich bei der Abtastung des Maßstabstoßes 15 die Phasenbeziehungen der Rechtecksignale U1, U2 bzw. U1F, U2F nicht ändern. Beim Überfahren des Maßstabstoßes 15 ergibt sich somit kein Phasenwinkelfehler und kein zusätzlicher Unterteilungsfehler, da die Fehlstelle am Maßstabstoß 15 von den Photodetektoren 12 und 14 gleichzeitig erfaßt wird und dies nur zu einer gleichmäßigen Verringerung der Ausgangsamplituden der Fotoströme im Bereich A (Figur 2) führt.

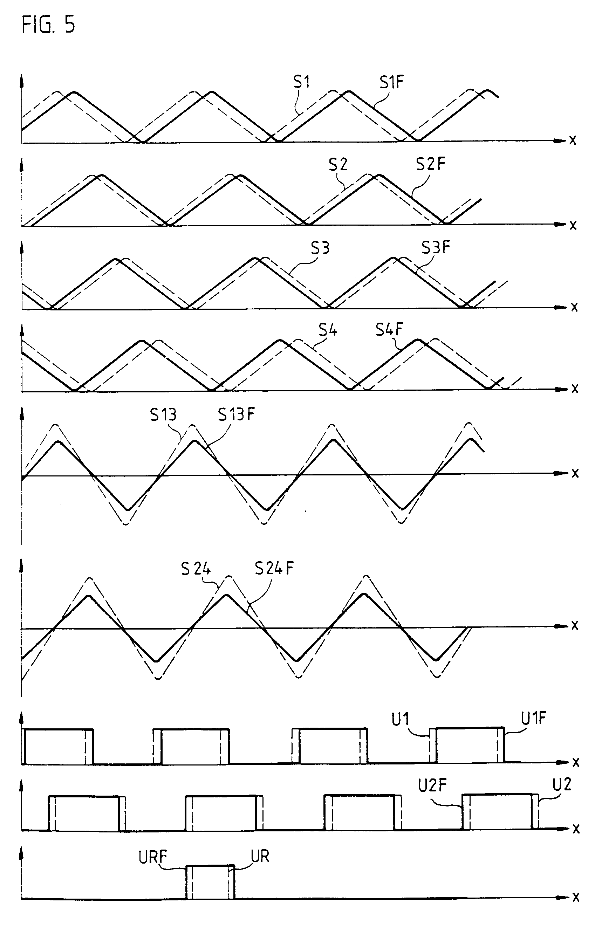

In Figur 4 ist ein weiteres Ausführungsbeispiel einer inkrementalen Längenmeßeinrichtung gezeigt. Der Maßstab 16 wird mittels der Abtastplatte 17, wie bereits zu Figur 1 beschrieben, abgetastet. Im Gegensatz zu Figur 1 sind hier beidseitig der Referenzmarke 18 jeweils zwei um T/4 gegeneinander versetzte Inkrementalspuren 19-22 angeordnet. Aus der Inkrementalspur 19 wird das sogenante 0°-Signal, aus der Inkrementalspur 20 das 90°-Signal, aus der Inkrementalspur 21 das 180°-Signal und aus der Inkrementalspur 22 das 270°-Signal erzeugt. Diese Analogsignale sind in Figur 5 mit S1, S2, S3 und S4 bezeichnet. Eine Subtraktion der Signale S1, S3 und S2, S4 führt zu einer Verdoppelung der Wechselspannungsamplitude bei gleichzeitigem Herausfallen der Gleichspannungskomponenten, wie an den gezeigten Signalen S13 und S24 zu sehen ist. Wenn diese Signale S13 und S24 jeweils in ihrem Nulldurchgang getriggert werden, entstehen die Rechtecksignale U1 und U2, deren Verknüpfung mit dem Referenzsignal den Referenzimpuls UR ergibt. Bei einer Verkippung der Abtastplatte 17 gegenüber dem Maßstab 16 um den Kippwinkel K tritt bei den Signalen S2 und S3 eine Phasenverschiebung in entgegengesetzten Richtungen aber um gleiche Beträge auf, es entstehen die Signale S2F und S3F. Ebenso verschieben sich die Signalverläufe S1 und S4 um gleiche Beträge, wie an den Signalen S1F und S4F zu sehen ist. Durch Differenzbildung (S1F-S3F) und (S2F-S4F) entstehen die Signale S13F und S24F, die in ihren Nulldurchgängen gegenüber den Signalen S13 und S24 um gleiche Beträge phasenverschoben sind. Durch Triggerung der Signale S13F und S24F werden die Rechtecksignale U1F und U2F gebildet, die mit dem Referenzsignal logisch verknüpf den Referenzimpuls URF bilden. Aus Figur 5 ist ersichtlich, daß die Zuordnung des Referenzimpulses URF zu den Rechtecksignalen U1, U2 bzw. U1F, U2F erhalten bleibt. Da die Zählsignale aus den Rechtecksignalen U1, U2 bzw. U1F, U2F gewonnen werden, bleibt auch die Beziehung zwischen einem festgelegten Zählwert und dem Referenzimpuls UR, URF erhalten.

Erfindungsgemäß können die Inkrementalspuren in nicht gezeigter Weise auch anders angeordnet sein, so z. B. je zwei Inkrementalspuren beidseitig der Referenzmarke, wobei zwischen der Referenzmarke und den Inkrementalspuren für das 0° - und das 180° - Signal gleiche Abstände sowie gleiche Abstände für das 90° - und das 270° - Signal gewählt werden. Wichtig ist, daß die Signale, die mit dem Referenzsignal verknüpft werden bei Verkippungen der Abtastplatte jeweils um gleiche Beträge, aber in entgegengesetzten Richtungen gegeneinander phasenverschoben werden. Diese Bedingung kann durch richtig gewählte Anordnungen der Inkrementalspuren relativ zur Referenzmarke und durch geeignete Wahl der Führung sowie des Ankoppelpunktes der Abtastplatte bzw. der Abtasteinheit eingehalten werden.

Bei dem gezeigten Beispiel erfolgt die Beleuchtung des Maßstabes 1 mit mehreren Lichtquellen 9-11, selbstverständlich ist es auch möglich, nur eine Lichtquelle mit einem Kondensor zur gleichmäßigen Beleuchtung aller Inkrementalspuren und der Referenzmarkenspur zu verwenden. Weiterhin kann die Kombination der Photodetektoren mit der Abtastplatte durch ein Substrat in Form einer strukturierten Solarzelle ersetzt werden.

Die Referenzmarken 7,18 sind vereinfacht als rechteckige Öffnungen dargestellt, sie können aber auch aus Strichgruppen mit bestimmter Strichverteilung bestehen (z.B. DE-OS 18 14 785, DE-PS 29 52 106, DE-OS 31 44 334). Desweiteren können auch mehrere Referenzmarken entlang der Inkrementalspuren für verschiedene Steuer- und Kontrollzwecke angeordnet sein.

Die Erfindung ist sowohl bei inkrementalen Längenals auch bei Winkelmeßeinrichtungen einsetzbar, wie sie z.B. bei Rundtischmeßsystemen mit Maßband (DE-OS 34 16 091) angewendet werden. Die Inkrementalteilungen sowie die Referenzmarken sind nicht auf die gezeigte, im Durchlicht abtastbare Ausführung beschränkt, erfindungsgemäß können auch Inkrementalteilungen und Referenzmarken Verwendung finden, die im Auflicht abtastbar oder die als Phasengitter ausgebildet sind. Die Erfindung kann aber auch bei magnetischen, induktiven oder kapazitiven Meßeinrichtungen mit Erfolg eingesetzt werden.

## Patentansprüche

1. Inkrementale Längen- oder Winkelmeßeinrichtung zur Messung der Relativlage zweier Objekte, bei der eine Maßverkörperung (1) an einem der Objekte und eine Abtasteinheit (2) an dem anderen Objekt befestigt ist, wobei die Maßverkörperung (1) mehrere Inkrementalspuren (5, 6, 19-22) mit der gleichen Teilungsperiode T aufweist, die in Meßrichtung X gegeneinander um einen Teilbetrag der Teilungsperiode T versetzt angeordnet sind, dadurch gekennzeichnet, daß parallel zu den Inkrementalspuren (5, 6, 19-22) eine Referenzmarkenspur (8) mit zumindest einer Referenzmarke (7, 18) vorgesehen ist, und daß beidseitig der Referenzmarkenspur (8) zumindest eine Inkrementalspur (5, 6, 19-22) angeordnet ist, daß weiterhin die durch Abtastung der Inkrementalspuren (5, 6, 19-22) gewonnenen Signale (U1, U2, U1F, U2F) mit dem durch Abtastung der Referenzmarke (7, 18) gewonnenen Referenzimpuls (UR, URF) logisch verknüpft werden, und daß die Abstände zwischen der Referenzmarkenspur (8) und den Inkrementalspuren (5, 6, 19-22) so gewählt sind, daß bei Verkippen der Abtasteinheit (2) die Signale (U1, U2, U1F, U2F) die mit dem Referenzimpuls (UR, URF) verknüpft werden, jeweils um gleiche Beträge, aber in entgegengesetzten Richtungen gegeneinander phasenverschoben sind.

2. Inkrementale Längen- oder Winkelmeßeinrichtung nach Anspruch 1, dadurch gekennzeichnet, daß die Maßverkörperung (1) beidseitig der Referenzmarkenspur (8) jeweils eine Inkrementalspur (5, 6) aufweist, und daß die zwei Inkrementalspuren (5, 6) gegeneinander um T/4 versetzt angeordnet sind.

3. Inkrementale Längen- oder Winkelmeßeinrichtung nach Anspruch 1, dadurch gekennzeichnet, daß die Maßverkörperung (16) beidseitig der Referenzmarkenspur jeweils zwei Inkrementalspuren (19-22) aufweist, und daß die Inkrementalspuren (19-22) gegeneinander um T/4 versetzt angeordnet sind.

4. Inkrementale Längen- oder Winkelmeßeinrichtung nach Anspruch 3, dadurch gekennzeichnet, daß die erste Inkrementalspur (19), aus der das 0°-Signal (S1, S1F) und die zweite Inkrementalspur (20), aus der das 90°-Signal (S2, S2F) gebildet wird, auf der einen Seite der Referenzmarke (18) angeordnet sind, und daß die dritte Inkrementalspur (21), aus der das 180°-Signal (S3, S3F) und die vierte Inkrementalspur (22), aus der das 270°-Signal (S4, S4F) gebildet wird, auf der anderen Seite der Referenzmarke angeordnet sind, daß weiterhin jeweils die zweite Inkrementalspur (20) und die dritte Inkrementalspur (21) sowie die erste Inkrementalspur (19) und die vierte Inkrementalspur (22) in gleichen Abständen zur Referenzmarke (18) angeordnet sind.

5. Inkrementale Längen- oder Winkelmeßeinrichtung nach Anspruch 3, dadurch gekennzeichnet, daß jeweils die Inkrementalspuren, die das 0°-Signal und das 180°-Sional sowie die Inkrementalspuren, die das 90°-Signal und das 270°-Signal bilden, in gleichen Abständen zur Referenzmarke angeordnet sind.

6. Inkrementale Längen- oder Winkelmeßeinrichtung nach Anspruch 2, dadurch gekennzeichnet, daß die Signale der Abtasteinheit Komparatoren zur Bildung von Rechtecksignalen (U1, U2, U0, U1F, U2F, U0F) zugeführt werden, und diese Rechtecksignale (U1, U2, U0, U1F, U2F, U0F) einem UND-Glied zugeleitet werden, an dessen Ausgang der Referenzimpuls (UR, URF) ansteht.

7. Inkrementale Längen- oder Winkelmeßeinrichtung nach einem der vorhergehenden Ansprüche, dadurch gekennzeichnet, daß die Inkrementalspuren (5, 6) und die zumindest eine Referenzmarke (7) photoelektrisch abtastbar ausgebildet sind, daß die Beleuchtung der Maßverkörperung (1) mit zumindest einer Lichtquelle (9-11) erfolgt, daß den Inkrementalspuren (5, 6) und der Referenzmarke (7) eine Abtastplatte (2) mit zumindest einer gemeinsamen Teilung mit der Teilungsperiode T zugeordnet ist, wobei jeder Inkrementalspur (5, 6) und der Referenzmarkenspur (8) mit der Referenzmarke (7) ein Photodetektor (12-14) zugeordnet ist und die Photodetektoren (12, 14) der Inkrementalspuren (5, 6) symmetrisch zu dem Photodetektor (13) der Referenzmarkenspur (8) angeordnet sind.

8. Inkrementale Längen- oder Winkelmeßeinrichtung nach Anspruch 7, dadurch gekennzeichnet, daß die Photodetektoren auf einem Substrat aufgebracht sind, und daß das Abtastgitter ebenfalls auf diesem Substrat ausgebildet ist.

9. Inkrementale Längen- oder Winkelmeßeinrichtung nach einem der Ansprüche 1-6, dadurch gekennzeichnet, daß die Teilung der Inkrementalspuren und die zumindest eine Referenzmarke als Magnetmarken ausgebildet sind, die mittels magnetfeldabhängiger Widerstände abtastbar sind.

## Claims

1. Incremental length or angle measuring device for measuring the relative position of two objects, in which an embodiment of a measure (1) is attached to one of the objects and a scanning unit (2) to the other object, wherein the embodiment of the measure (1) comprises several incremental tracks (5, 6, 19-22) with the same graduation period T, which are offset from each other in the direction of measurement X by a fraction of the graduation period T, characterised in that a reference mark track (8) with at least one reference mark (7, 18) is provided parallel to the incremental tracks (5, 6, 19-22), and in that on both sides of the reference mark track (8) is arranged at least one incremental track (5, 6, 19-22), in that furthermore the signals (U1, U2, U1F, U2F) obtained by scanning the incremental tracks (5, 6, 19-22) are connected logically with the reference pulse (UR, URF) obtained by scanning the reference mark (7, 18), and in that the distances between the reference mark track (8) and the incremental tracks (5, 6, 19-22) are selected in such a way that on tilting the scanning unit (2), the signals (U1, U2, U1F, U2F) which are connected with the reference pulse (UR, URF) are phase shifted relative to each other in each case by equal amounts, but in opposite directions.

2. Incremental length or angle measuring device according to claim 1, characterised in that the embodiment of the measure (1) comprises an incremental track (5, 6) on either side of the reference mark track (8), and in that the two incremental tracks (5, 6) are offset from each other by T/4.

3. Incremental length or angle measuring device according to claim 1, characterised in that the embodiment of the measure (16) comprises two incremental tracks (19-22) on either side of the reference mark track, and in that the incremental tracks (19-22) are offset from each other by T/4.

4. Incremental length or angle measuring device according to claim 3, characterised in that the first incremental track (19) from which the 0° signal (S1, S1F) is formed and the second incremental track (20) from which the 90° signal (S2, S2F) is formed are arranged on one side of the reference mark (18), and in that the third incremental track (21) from which the 180° signal (S3, S3F) is formed and the fourth incremental track (22) from which the 270° signal (S4, S4F) is formed are arranged on the other side of the reference mark, in that furthermore respectively the second incremental track (20) and the third incremental track (21) as well as the first incremental track (19) and the fourth incremental track (22) are arranged at equal intervals from the reference mark (18).

5. Incremental length or angle measuring device according to claim 3, characterised in that respectively the incremental tracks which form the 0° signal and the 180° signal as well as the incremental tracks which form the 90° signal and the 270° signal are arranged at equal intervals from the reference mark.

6. Incremental length or angle measuring device according to claim 2, characterised in that the signals of the scanning unit are delivered to comparators for forming square wave signals (U1, U2, U0, U1F, U2F, U0F), and these square wave signals (U1, U2, U0, U1F, U2F, U0F) are delivered to an AND gate, at the output of which appears the reference pulse (UR, URF).

7. Incremental length or angle measuring device according to any of the preceding claims, characterised in that the incremental tracks (5, 6) and the at least one reference mark (7) can be scanned photoelectrically, in that the embodiment of the measure (1) is illuminated with at least one light source (9-11), in that associated with the incremental tracks (5, 6) and the reference mark (7) is a scanning plate (2) with at least one common scale with the graduation period T, wherein a photodetector (12-14) is associated with each incremental track (5, 6) and the reference mark track (8) with the reference mark (7), and the photodetectors (12, 14) of the incremental tracks (5, 6) are arranged symmetrically to the photodetector (13) of the reference mark track (8).

8. Incremental length or angle measuring device according to claim 7, characterised in that the photodetectors are mounted on a substrate, and in that the scanning grid is likewise formed on this substrate.

9. Incremental length or angle measuring device according to any of claims 1-6, characterised in that the scale of the incremental tracks and the at least one reference mark are formed as magnetic marks which can be scanned by means of magnetic field-dependent resistances.

## Revendications

1. Dispositif incrémental de mesure de longueurs ou d'angles pour la mesure de la position relative de deux objets, dans lequel une mesure matérialisée (1) est fixée sur l'un des objets et une unité de lecture (2) est fixée sur l'autre objet, la mesure matérialisée (1) comportant plusieurs pistes incrémentales (5, 6, 19-22) qui présentent la même période de graduation T et sont décalées l'une par rapport à l'autre d'une fraction de la période dans la direction de mesure X, caractérisé par le fait qu'il est prévu, parallèlement aux pistes incrémentales (5, 6, 19-22), une piste de repères de référence (8) portant au moins un repère de référence (8), par le fait quau moins une piste incrémentale (5, 6, 19-22) est disposée de chaque côté de la piste de repères de référence (8), par le fait que les signaux (U1, U2, U1F, U2F) obtenus par la lecture des pistes incrémentales (5, 6, 19-22) sont combinés logiquement avec l'impulsion de référence (UR, URF) obtenue par lecture du repère de référence (7, 18), et par le fait que les distances entre la piste de repères de référence (8) et les pistes incrémentales (5, 6, 19-22) sont choisies telles, qu'en cas d'inclinaison de l'unité de lecture (2), les signaux (U1, U2, U1F, U2F) combinés avec l'impulsion de référence (UR, URF) soient mutuellement déphasés des mêmes valeurs mais dans des directions opposées.

2. Dispositif incrémental de mesure de longueurs ou d'angles selon la revendication 1, caractérisé par le fait que la mesure matérialisée (1) comporte, de chaque côté de la piste de repères de référence (8), une piste incrémentale (5, 6) et par le fait que que les deux pistes incrémentales (5, 6) sont mutuellement décalées de T/4.

3. Dispositif incrémental de mesure de longueurs ou d'angles selon la revendication 1, caractérisé par le fait que la mesure matérialisée (16) comporte, de chaque côté de la piste de repères de référence, deux pistes incrémentales (19-22) et par le fait que que les pistes incrémentales (19-22) sont mutuellement décalées de T/4.

4. Dispositif incrémental de mesure de longueurs ou d'angles selon la revendication 3, caractérisé par le fait que les première (19) et deuxième (20) pistes incrémentales, à partir desquelles sont formés respectivement le signal 0° (S1, S1F) et le signal 180° (S2, S2F), sont situées d'un côté du repère de référence (18) et par le fait que les troisième (21) et quatrième (22) pistes incrémentales, à partir desquelles sont formés respectivement le signal 180° (S3, S3F) et le signal 270° (S4, S4F), sont situées de l'autre côté du repère de référence, par le fait que la deuxième piste (20) incrémentale et la troisième piste (21) incrémentale d'une part, et la première piste (19) incrémentale et la quatrième piste (22) incrémentale d'autre part sont situées à la même distance du repère de référence (18).

5. Dispositif incrémental de mesure de longueurs ou d'angles selon la revendication 3, caractérisé par le fait que les pistes incrémentales qui génèrent les signaux 0° et 180° et les pistes incrémentales qui génèrent les signaux 90° et 270° sont situées respectivement à distance égale du repère de référence.

6. Dispositif incrémental de mesure de longueurs ou d'angles selon la revendication 2, caractérisé par le fait que les signaux de l'unité de lecture sont envoyés à des comparateurs pour former des signaux carrés (U1, U2, U0, U1F, U2F, U0F) et lesdits signaux carrés sont transmis à une porte ET à la sortie de laquelle on obtient l'impulsion de référence (UR, URF).

7. Dispositif incrémental de mesure de longueurs ou d'angles selon l'une des revendications précédentes, caractérisé par le fait que les pistes incrémentales (5, 6) et le repère de référence (7) au nombre d'au moins un sont agencés de manière à permettre une lecture par voie photo-électrique, par le fait que la mesure matérialisée (1) est éclairée par au moins une source lumineuse (9-11), par le fait qu'une plaque de lecture (2) portant au moins une graduation commune de période T est associée aux pistes incrémentales (5, 6) et au repère de référence (7), une cellule photo-électrique (12-14) étant associée à chaque piste incrémentale (5, 6) et à la piste de repères de référence (8) portant le repère (7), et les cellules photo-électriques (12, 14) pour les pistes incrémentales (5, 6) étant disposées symétriquement par rapport à la cellule photo-électrique (13) pour la piste de repères de référence (8).

8. Dispositif incrémental de mesure de longueurs ou d'angles selon la revendication 7, caractérisé par le fait que les cellules photoélectriques sont appliquées sur un substrat et par le fait que le réseau de lecture est également formé sur ledit substrat.

9. Dispositif incrémental de mesure de longueurs ou d'angles selon l'une des revendications 1 à 6, caractérisé par le fait que la graduation des pistes incrémentales et le repère de référence au nombre d'au moins un se présentent sous la forme de repères magnétiques qui sont lus par l'intermédiaire de magnéto-résistances
